# EUROPÄISCHE PATENTSCHRIFT

(11) **EP 0 474 656 B1**
(45) Veröffentlichungstag und Bekanntmachung des Hinweises auf die Patenterteilung: **13.04.1994**
(21) Anmeldenummer: 90907008.8
(22) Anmeldetag: 11.05.1990
(51) Int. Cl.: G06F 15/16

(54) **RECHNERSYSTEM**
COMPUTER SYSTEM
SYSTEME INFORMATIQUE

(30) Priorität: 31.05.1989 DE 3917715
(43) Veröffentlichungstag der Anmeldung: 18.03.1992
(73) Patentinhaber: TELDIX GmbH, D-69046 Heidelberg (DE)
(72) Erfinder: FEIGENBUTZ, Michael, D-6900 Heidelberg 1 (DE); FAULHABER, Michael, D-6800 Mannheim 61 (DE)
(74) Vertreter: Wiechmann, Manfred, Dipl.-Ing.
(86) Internationale Anmeldenummer: EP9000758
(87) Internationale Veröffentlichungsnummer: WO9015387

(56) Entgegenhaltungen:
- EP-A- 0 311 705
- EP-A- 0 318 270
- US-A- 4 099 233
- IEEE Micro, Band 5, Nr. 4, August 1985, IEEE, (New York, US), J. Rose et al.: "FERMTOR: A tunable multiprocessor architecture", Seiten 5-17.

## Beschreibung

Die Erfindung betrifft ein Rechnersystem nach der Gattung des Hauptanspruchs.

In der Rechnertechnik werden zur optimalen Bearbeitung von Prozessen oder Problemen und zur optimalen Zeitnutzung zunehmend mehrere Prozessoren zu Mehrprozessor-Systemen zusammengefaßt. Diese einzelnen Prozessoren sind an ihre jeweilige spezielle Aufgabenstellung optimal angepaßt worden und können die Aufgabe weitgehend unabhängig voneinander bearbeiten.

Ein diesen Prozessoren übergeordneter Prozessor faßt die Ergebnisse der Prozessoren zur weiteren Bearbeitung zusammen.

In Mehrprozessorsystemen, in denen die einzelnen Prozessoren auf einen gemeinsamen System-Bus im Time-Sharing-Betrieb arbeiten, besteht die Gefahr, daß der System-Bus zum Engpaß für die Datenkommunikation wird.

In der EP-A1 0 311 705 wird ein Rechnersystem beschrieben, welches unabhängig voneinander arbeitende Prozessorsysteme, mit je zwei unabhängig voneinander arbeitenden lokalen Prozessorsystemen, je einem Koppelelement und einem Speicher, eine Entscheidungslogik, mehrere Hauptspeicher, und einen System-Bus aufweist. Der System-Bus verbindet die Entscheidungslogik, die Koppelelemente und die Hauptspeicher miteinander.

Die lokalen Prozessorsysteme eines Prozessorsystems sind über das Koppelelement mit dem System-Bus verbindbar.

Die EP-A2 0 318 270 beschreibt die für größere Rechneranlagen übliche Vernetzung von Multiprozessor-Systemen.
Das hier beschriebene Multiprozessor-System weist mehrere Gruppen von Prozessoren auf. Die Prozessoren einer Gruppe sind mit einer Speicher-Steuereinheit verbunden. Den einzelnen Gruppen können weiter Speicher- und Service-Einheiten zugeordnet sein, die ebenfalls mit der Speicher-Steuereinheit verbunden sind. Alle Speicher-Steuereinheiten der einzelnen Gruppen sind wiederum mit einer übergeordneten Steuereinheit verbunden, die die Verbindungen der einzelnen Gruppen untereinander koordiniert.

Der Erfindung liegt die Aufgabe zugrunde, den Datentransport über den System-Bus zu reduzieren und zeitlich optimaler zu gestalten.

Diese Aufgabe wird durch die im kennzeichnenden Teil des Anspruchs 1 angegebenen Merkmale gelöst.

Vorteile der Erfindung sind z.B., daß für die einzelnen Prozessorsysteme weniger Wartezeiten auftreten, daß örtlich eng miteinander verbundene Prozessorsysteme miteinander kommuzieren können, ohne den System-Bus benutzen zu müssen.

Weitere Vorteile der Erfindung ergeben sich aus den Unteransprüchen und aus der Beschreibung.

Bei dem erfindungsgemäßen Rechnersystem sind mehrere Prozessor-Untersysteme vorhanden, denen jeweils mindestens zwei weitgehend unabhängig voneinander arbeitende lokale Prozessorsysteme zugeordnet sind. Die Prozessor-Untersysteme sind durch den System-Bus miteinander verbunden und können über den System-Bus miteinander und mit weiteren evtl. vorhandenen System-Baugruppen, wie z.B. eine System-Bus-Entscheidungslogik, einem System-Speicher oder auch einem am System-Bus angeschlossenen Prozessor, kommunizieren.

Die lokalen Prozessorsysteme eines Prozessor-Untersystems sind über ein Koppelelement miteinander oder mit dem System-Bus verbindbar, wobei eine Entscheidungslogik des Koppelelements in Abhängigkeit von einer die Reihenfolge der Abarbeitung von Kommunikationsanforderungen der lokalen Prozessorsysteme bestimmende wahlweise programmierbaren Strategie, die nächste über das Koppelelement herstellbare Verbindung bestimmt.

Das Koppelelement enthält die Entscheidungslogik, mindestens drei Ein-/Ausgänge, sogenannte Ports, zum Anschluß der lokalen Prozessorsysteme und des System-Bus, einen globalen Speicher z.B. zur Speicherung von abgearbeiteten Programmteilen der lokalen Prozessorsysteme und/oder zur Programm- und Datenspeicherung eines evtl. im Koppelelement vorhandenen Prozessors. Weiter enthält das Koppelelement einen Kommunikations-Bus zur Verbindung der im Koppelelement enthaltenen Bauelemente.

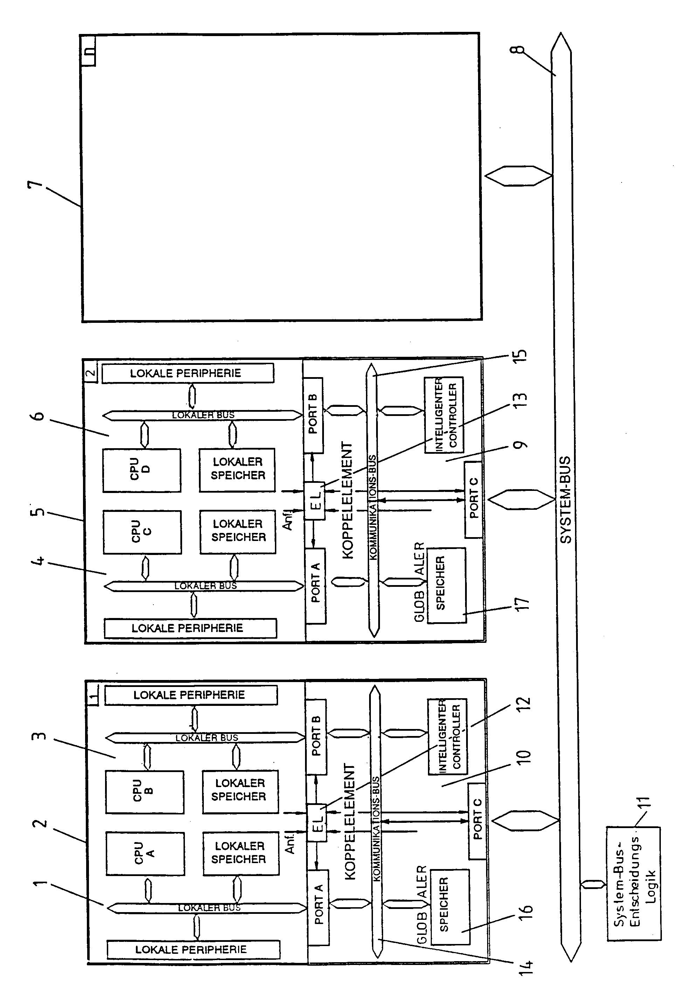

Die Erfindung wird nachfolgend anhand der Figur näher erläutert.

Die Figur zeigt ein Ausführungsbeispiel eines Rechnersystems. Das Rechnersystem besteht aus mehreren Prozessor-Untersystemen 2, 5, 7, die über einen System-Bus 8 miteinander und mit einer dem Rechnersystem zugeordneten System-Bus-Entscheidungslogik 11 verbunden sind. Die Prozessor-Untersysteme 2, 5, 7 enthalten jeweils ein Koppelelement 9, 10 ... und zwei lokale Prozessorsysteme 1, 3; 4, 6 wobei jeweils ein Prozessor-Untersystem 2, 5, 7 zu einer Baugruppe auf einer Karte zusammengefaßt ist. Selbstverständlich kann ein Rechnersystem mehr Prozessor-Untersysteme und ein Prozessor-Untersystem 2, 5, 7 mehr lokale Prozessorsysteme 1, 3; 4, 6 enthalten.

Ein lokales Prozessorsystem 1, 3; 4, 6 enthält alle zur selbstständigen Arbeit eines Prozessorsystems benötigten Elemente wie lokalen Prozessor, lokalen Speicher, lokalen Bus und evtl. eine lokale Peripherie.

Die Prozessor-Untersysteme können wie im gezeigten Beispiel alle gleich aufgebaut sein oder sie können unterschiedliche Elemente besitzen. Z.B. besteht die Möglichkeit, daß ein lokales Prozessorsystem 1, 3; 4, 6 keine lokale Peripherie besitzt, oder daß das Koppelelement 9, 10 keinen globalen Speicher oder keinen intelligenten Controller besitzt. Will z.B. das lokale Prozessorsystem 1 mit dem lokalen Prozessorsystem 3 kommunizieren, so sendet das lokale Prozessorsystem 1 eine Kommunikationsanforderung an die Entscheidungslogik 12 des dem Prozessor-Untersystem 2 zugeordneten Koppelelements 10. Die Entscheidungslogik 12 des Koppelelements 10 prüft, ob der Kommunikations-Bus 14 und der globale Speicher 16 des Koppelelements 10 frei sind. Sind der Kommunikations-Bus 14 und der globale Speicher 16 frei, d.h. greift nicht gerade ein anderer Prozessor auf den Kommunikations-Bus 14 und den globalen Speicher 16 des Koppelelements 10 zu, öffnet die Entscheidungslogik 12 den Ein-/Ausgang A und hält die Ein-/Ausgänge B und C geschlossen, der globale Speicher 16 wird selektiert und der lokale Prozessor 1 greift auf den globalen Speicher 16 zu. Die Entscheidungslogik 12 kann eine sofortige Unterbrechung des gerade laufenden Programms beim lokalen Prozessor 3 auslösen um dem lokalen Prozessor 3 die Möglichkeit zu geben, die neuen Daten aus dem globalen Speicher 16 zum lokalen Speicher des lokalen Prozessorsystems 3 zu holen oder das lokale Prozessorsystem 3 überwacht ständig, ob für ihn interessante Daten im globalen Speicher 16 stehen. Wenn ja, liest er sie zu gegebener Zeit aus.

Es besteht auch die Möglichkeit, daß das lokale Prozessorsystem 1 über die Entscheidungslogik 12 des Koppelelements 10 eine Programmunterbrechung beim lokalen Prozessorsystem 3 auslöst und seine Daten direkt in den lokalen Speicher des lokalen Prozessorsystems 3 schreibt.

Auf die gleiche Weise kann bei dem dargestellten Rechnersystem das lokale Prozessorsystem 4 des Prozessor-Untersystems 5 mit dem lokalen Prozessorsystem 6 kommunizieren.

Die Kommunikation zwischen den lokalen Prozessorsystemen 1 und 3 sowie 4 und 6 der Prozessor-Untersysteme 2 und 5 wird über die jeweiligen Koppelelemente 9 und 10 ermöglicht, ohne den System-Bus 8 zu belasten.

Will das lokale Prozessorsystem 1 des Prozessor-Untersystems 2 mit dem lokalen Prozessorsystem 4 des Prozessor-Untersystems 5 kommunizieren, so sendet das lokale Prozessorsystem 1 eine Kommunikationsanforderung über die Entscheidungslogik 12 des Koppelelements 10 an die System-Bus-Entscheidungslogik 11.

Die System-Bus-Entscheidungslogik 11 prüft, ob der System-Bus 8 und das Koppelelement 9 des Prozessor-Untersystems 5 frei sind. Wenn der System-Bus 8 und das Koppelelement 9 frei sind, wird beides dem lokalen Prozessorsystem 1 zugeteilt. Die Entscheidungslogik 12 des Koppelelements 10 öffnet die Ein-/Ausgänge A und C des Koppelelements 10 und hält den Ein-/Ausgang B geschlossen. Das Koppelelement 10 wird dadurch für den lokalen Prozessor 1 transparent. Die Adresse des lokalen Prozessorsystems 4 wird auf den System-Bus 8 durchgeschaltet. Im Fall, daß das Koppelelement 9 frei ist, öffnet die Entscheidungslogik 13 des Koppelelements 9 den Ein-/Ausgang C des Koppelelements 9 und hält die Ein-/Ausgänge A und B geschlossen. Der globale Speicher 17 des Koppelelements 9 wird selektiert und das lokale Prozessorsystem 1 des Prozessor-Untersystems 2 greift auf den globalen Speicher 17 des Koppelelements 9 zu. Auch hier kann das lokale Prozessorsystem 1 eine sofortige Unterbrechung des gerade laufenden Programms beim lokalen Prozessorsystem 4 auslösen, um dem lokalen Prozessorsystem 4 die Möglichkeiten zu geben, die Daten aus dem globalen Speicher 17 des Koppelelements 9 in den lokalen Speicher des lokalen Prozessorsystems 4 zu holen, oder das lokale Prozessorsystem 4 überwacht ständig, ob für ihn interessante Daten im globalen Speicher 17 stehen. Wenn ja, liest er sie zu gegebener Zeit aus.

Auch hier besteht die Möglichkeit, daß bei nicht belegtem Koppelelement 9 das lokale Prozessorsystem 1 seine Daten direkt in den lokalen Speicher des lokalen Prozessorsystems 4 schreibt. Die Kommunikation zwischen den lokalen Prozessoren 1 und 4 wird über die transparenten Koppelelemente 9 und 10 ohne Belastung der lokalen Prozessorsysteme 3 und 6 durchgeführt.

Für den Fall, daß ein vorhandener intelligenter Controller des Koppelelements 10 Daten vom globalen Speicher 16 zum globalen Speicher 17 des Koppelelements 9 über den System-Bus 8 transferieren will, adressiert der intelligente Controller des Koppelelements 10 bei nicht belegtem Koppelelement 10 den globalen Speicher 16 und liest die gewünschten Daten. Die Ein-/Ausgänge A, B und C des Koppelelements 10 sind dabei geschlossen. Nach der Datenübernahme adressiert der intelligente Controller des Koppelelements 10 bei nicht belegten Koppelelementen 9, 10 über die System-Bus-Entscheidungslogik 11 den globalen Speicher 17 des Koppelelements 9. Die Entscheidungslogik 12 des Koppelelements 10 öffnet den Ein-/Ausgang C und hält die Ein-/Ausgänge A und B geschlossen.

Die Adresse des globalen Speichers 17 im Koppelelemet 9 wird auf den System-Bus 8 durchgeschaltet. Die Entscheidungslogik 13 des Koppelelements 9 öffnet den Ein-/Ausgang C und hält die Ein-/Ausgänge A und B des Koppelelements 9 geschlossen. Der intelligente Controller des Koppelelements 10 kann seine Daten in den globalen Speicher 17 des Koppelelements 9 übertragen. Die lokalen Busse werden bei der Datenübertragung nicht belastet.

Falls ein Koppelelement 9, 10 oder der System-Bus 8 wegen des Zugriffs eines anderen Prozessors kurzzeitig nicht zur Verfügung steht, sind Wartezyklen erforderlich.

## Patentansprüche

1. Rechnersystem enthaltend unabhängig voneinander arbeitende Prozessorsysteme (2, 5), eine Entscheidungslogik (11) und einen die Prozessorsysteme (2, 5) und die Entscheidungslogik (11) miteinander verbindenden System-Bus (8), wobei mindestens zwei Prozessorsysteme (2, 5 ...) mindestens zwei unabhängig voneinander arbeitende lokale Prozessorsysteme (1, 3; 4, 6; ...) aufweisen, die gegebenenfalls mit dem System-Bus (8) über ein Koppelelement (9, 10, ...) verbindbar sind, dadurch gekennzeichnet, daß die lokalen Prozessorsysteme (1, 3; 4, 6; ...) eines Prozessorsystems (2, 5) auch miteinander über das Koppelelement (9, 10, ...) verbindbar sind, und daß eine Entscheidungslogik (12, 13) des Koppelelements (9, 10, ...) in Abhängigkeit von einer, die Reihenfolge der Abarbeitung von Kommunikationsanforderungen der lokalen Prozessorsysteme (1, 3; 4, 6; ...) bestimmende, für verschiedene Übertragungswege wahlweise programmierbaren Strategie, die nächste über das Koppelelement (9, 10, ...) herstellbare Verbindung bestimmt.

2. Rechnersystem nach Anspruch 1, dadurch gekennzeichnet, daß das Koppelelement (9, 10, ...) außer der Entscheidungslogik (12, 13) mindestens drei Ein-/Ausgänge (Ports A, B, C), einen globalen Speicher (16, 17) und einen Kommunikations-Bus (14, 15) enthält.

3. Rechnersystem nach Anspruch 2, dadurch gekennzeichnet, daß die mindestens drei Ein-/Ausgänge des Koppelelements (9, 10, ...) unabhängig voneinander ansteuerbar sind.

4. Rechnersystem nach Anspruch 1 und 2, dadurch gekennzeichnet, daß der globale Speicher (16, 17) jedes Koppelelements (9, 10, ...) auch zur Zwischenspeicherung von Informationen jedes lokalen Prozessorsystems (1, 3; 4, 6; ...) dient.

5. Rechnersystem nach einem der vorherigen Ansprüche, dadurch gekennzeichnet, daß das Koppelelement (9, 10, ...) einen intelligenten Controller enthält, der in der Lage ist, Daten über den System-Bus (8) zu transferieren.

## Claims

1. Computer system comprising independently operating processor systems (2,5), a decision logic unit (11) and a system bus (8) connecting the processor systems (2, 5) and the decision logic unit (11) together, wherein at least two processor systems (2, 5...) comprise at least two independently operating local processor systems (1, 3; 4, 6; ...) which in a given case are connectible with the system bus (8) by way of a coupling element (9, 10, ...), characterised in that the local processor systems (1, 3; 4, 6; ...) of a processor system (2, 5) are also connectible together by way of the coupling element (9, 10, ...) and that a decision logic unit (12, 13) of the coupling element (9, 10, ...) determines the next connection, which is producible by way of the coupling element (9, 10, ...), in dependence on a strategy which is selectably programmable for different transmission paths and which determines the sequence of processing of communications requests of the local processors (1, 3; 4, 6; ...).

2. Computer system according to claim 1, characterised in that the coupling element (9, 10), ...) includes, in addition to the decision logic unit (12, 13), at least three inputs/outputs (ports A, B, C), a global memory (16, 17) and a communications bus (14, 15).

3. Computer system according to claim 2, characterised in that the at least three inputs/outputs of the coupling element (9, 10), ...) are drivable independently of one another.

4. Computer system according to claim 1 and 2, characterised in that the global memory (16, 17) of each coupling element (9, 10, ...) also serves for the intermediate storage of information data of each local processor system (1, 3; 4, 6; ...).

5. Computer system according to one of the preceding claims, characterised in that the coupling element (9, 10, ...) includes an intelligent controller, which is in a position of transferring data over the system bus (8).

## Revendications

1. Système informatique contenant des systèmes à processeur (2, 5) travaillant indépendamment l'un de l'autre, un circuit logique de décision (11) et un bus de système (8) reliant l'un à l'autre les systèmes à processeur (2, 5) et le circuit logique de décision (11), système dans lequel au moins deux systèmes à processeur (2, 5, ...) présentent au moins deux systèmes à processeur local (1, 3. 4, 6; ...) qui travaillent indépendamment l'un de l'autre et peuvent être éventuellement reliés avec le bus (8) du système par l'intermédiaire d'un élément de couplage (9, 10, ...) système caractérisé par le fait que les systèmes à processeur local (1, 3; 4, 6; ...) d'un système à processeur (2, 5) peuvent être également reliés l'un à l'autre par l'intermédiaire de l'élément de couplage (9, 10, ...) et par le fait qu'un circuit logique de décision (12, 13) de l'élément de couplage (9, 10, ...) détermine la liaison suivante réalisable par l'intermédiaire de l'élément de couplage (9, 10, ...) en fonction d'une stratégie programmable au choix pour différents chemins de transmission, déterminant la succession du traitement des demandes de communication des systèmes à processeur local (1, 3; 4, 6; ...).

2. Système informatique selon la revendication 1, caractérisé par le fait qu'en dehors du circuit de décision logique (12, 13), l'élément de couplage (9, 10, ...) contient au moins trois entrées/sorties (points d'accès A, B, C), une mémoire globale (16, 17) et un bus de communication (14, 15).

3. Système informatique selon la revendication 2, caractérisé par le fait que les entrées/sorties, dont il y a au moins trois, de l'élément de couplage (9, 10, ...) peuvent être commandées indépendamment l'un de l'autre.

4. Système informatique selon les revendications 1 et 2, caractérisé par le fait que la mémoire globale (16, 17) de chaque élément de couplage (9, 10, ...) sert également à la mémorisation intermédiaire des informations de chaque système à processeur local (1, 3; 4, 6; ...).

5. Système informatique selon l'une des revendications précédentes, caractérisé par le fait que l'élément de couplage (9, 10, ...) contient un organe de commande intelligent qui est capable de transférer des données par l'intermédiaire du bus (8) du système.
